(19) Europäisches Patentamt
European Patent Office
Office européen des brevets

(11) EP 1 911 810 A1

(12) EUROPEAN PATENT APPLICATION

(43) Date of publication:
**16.04.2008 Bulletin 2008/16**

(51) Int Cl.:
***C08L 81/06*** *(2006.01)* ***G02B 5/30*** *(2006.01)*
***C08J 5/18*** *(2006.01)*

(21) Application number: **07253095.9**

(22) Date of filing: **07.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **07.08.2006 US 500181**

(71) Applicant: **Rohm and Haas Denmark Finance A/S**
**2100 Copenhagen (DK)**

(72) Inventors:
- **Bourdelais, Robert P.**
  **Pittsford, NY 14534 (US)**
- **Greener, Jehuda**
  **Rochester, NY 14618 (US)**

(74) Representative: **Buckley, Guy Julian et al**
**Rohm and Haas Europe Services ApS - UK Branch**
**European Patent Department**
**4th Floor, 22 Tudor Street**
**London EC4Y 0AY (GB)**

# (54) Microstructured film containing polysulfone polymer

(57) The invention relates to a film comprising microstructures on at least one surface thereof, the film comprising a polysulfone polymer. Such a film exhibits improved heat stability, light recycling capability, and faithful replication.

EP 1 911 810 A1

## Description

The invention relates to a polymer film comprising polysulfone microstructures on at least one side. In particular, a light redirecting polymeric film comprising a plurality of micrometer sized integral polysulfone features suitable for directing light energy such as in LCD display devices.

## BACKGROUND OF THE INVENTION

Polysulfone resin films are generally manufactured by means of hot-melt extrusion and solution casting methods. These films are known to be superior in optical properties, mechanical strength properties, electrical properties, transparency, heat resistance, flame resistance, etc. Because of these superior properties, this film is, for example, stretched and used as an optical filter such as a phase retarder for a liquid crystal display device. U.S. 5,611,985 (Kobayashi et al) describes a high-productivity method of manufacturing a high-quality polysulfone resin film with superior transparency by using the solution casting method and a high-quality retardation film with superior optical properties.

Aromatic polysulfone resins have also been used as constitutive materials for various coating substances, adhesives and composite materials, since they are not only excellent in heat resistance, flame retardation, chemical resistance and so on but also good in adhesion to materials such as metals, glass, ceramics, various resins and carbon compounds. In a utilization of the resin, for example, an organic solvent solution of the resin is applied onto a substrate, which is then subjected to heat treatment to cause molecular weight-increase i.e., further polymerization, followed by inactivation.

Aromatic polycarbonate are well known engineering thermoplastics that are in wide commercial use. Aromatic polysulfone carbonates have been described in the patent literature and it is common to use them in combination with an aromatic polycarbonate. In U.S. Pat. No. 3,737,409 the compositions include a copolymer of the reaction product of (a) bis-(3,5-dimethyl-4-hydroxyphenyl)sulfone, (b) 2,2-bis-(4-hydroxyphenylpropane) and (c) a carbonate precursor. These compositions are intended for molding applications, extrusion applications and for making films and fibers.

Polysulfone polymers have been suggested for use in liquid crystal displays. A base of glass has been employed as a transparent electrode base for liquid crystal displays, because of its excellent optical characteristics and very high surface smoothness, when ground. However, a glass board is high in density and should be itself sufficiently thick because of its fragility. Therefore, it is difficult to make a liquid crystal display on a glass base compact, light and resistant to impact. Use of a high-molecular-weight polymeric film has been proposed as a method to solve the disadvantages of the devices, which include a glass base.

U.S. 6,433,071 (Arai et al) describes an aromatic polysulfone resin composition comprising 5 to 50 parts by weight of a liquid crystal polyester resin having a flow temperature of 250 to 320 °C, based on 100 parts by weight of an aromatic polysulfone resin having a melt viscosity of less than 500 Pa.s measured at 340 °C. and a shear rate of 1000/second and a molded article thereof. The composition shows excellent flow-ability in molding without losing excellent mechanical property and heat-resistance of the molded article thereof.

U.S. 6,013,716 (Nomura et al) describes an aromatic polysulfone resin composition comprising 100 parts by weight of an aromatic polysulfone resin compounded with 5 to 240 parts by weight of glass fiber whose surface is treated with an urethane resin. The aromatic polysulfone resin composition is extremely useful as a material for heat-resistant usage including electronic and electric parts because of excellent heat resistance, excellent mechanical properties, high heat stability during mold-processing and low level of gas occluded in the resulting molded article.

U.S. Patent Application 2005/0212989 (Kashiwagi et al) discloses a lens array sheet having a plurality of pyramid shaped projections or recesses on a surface of a transparent film suitable to be used as a light condensing plate of an organic electroluminscence element. U.S. Patent Application number 2005/0167863 discloses a method for embossing a sheet material including heating at least a portion of the sheet directly or indirectly with radiant energy source, pressing a tool, against the heated portion of the sheet, thereby patterning the surface of the sheet.

Polysulfone polymers are commonly solvent cast to form smooth continuous sheets. The thermoplastic aromatic polysulfone resins are usually used as a solution of an organic solvent. Although the organic solvent used for preparing the solution is not particularly limited insofar as the solvent dissolves the resin, normally methylene chloride, 1,1,2-trichloroethane, N,N-dimethylformamide, 1-methyl-2-pyrrolidone, dimethylsulfoxide, pyridine, quinoline, aniline, o-chlorophenol, dimethylacetamide, diethylacetamide, anisol, .gamma.-butyrolactone, dioxolane and the like are used as the organic solvent.

Since aromatic polysulfone resin is amorphous, it has isotropy and has low mold shrinkage. Further, since it is higher in glass transition point than high heat resistance resins such as polyphenylene sulfide and polyether-ketone, it retains smaller extents of deterioration in strength, modulus of elasticity, creep resistance, etc. up to a higher temperature as compared with these resins. Thus, aromatic polysulfone resin is successfully usable as a material for electronic components.

Since aromatic polysulfone resins have relatively high melt viscosity, they need a higher molding temperature,

injection pressure and molding speed, when they are used for injection molding of electronic parts having a small size and a complicated shape or electronic parts having a thin walled region. The formation of small, precision optical structures on a polymer sheet is well know to be useful for redirecting light energy in electronic display systems such as OLED, electro luminance and liquid crystal displays. The continuous formation of the small precision optical structures as suggested in U.S. 6,721,102, US application 2001/0053075 and U.S. 6,027,220 is difficult with high molecular weight polysulfone that is commercially available. It has been found that the pressure and temperatures required to form continuous optical structures are difficult to maintain in a continuous polysulfone melt-extrusion molding process. It would be desirable if polysulfone polymer could be utilized to form small precision optical structures on the surface of a polymer sheet.

There is a need to provide a transparent micro-structured polymer film that provides improved heat stability, light recycling capability, and replication fidelity.

## SUMMARY OF THE INVENTION

The invention provides a film comprising microstructures on at least one surface thereof, said film comprising a polysulfone polymer. Such a film exhibits improved heat stability and light recycling capability.

## BRIEF DESCRIPTION OF THE DRAWINGS

The invention is best understood from the following detailed description when read with the accompanying drawing figures. It is emphasized that the various features are not necessarily drawn to scale.

Figure 1 is a simplified schematic diagram of an apparatus for fabricating optical films in accordance with an example embodiment.

Figure 2 is a magnified top schematic view of a microstructure in accordance with an example embodiment.

Figure 3 is a magnified top schematic view of a microstructure in accordance with an example embodiment.

Figure 4 is a magnified top schematic view of a microstructure in accordance with an example embodiment.

## DETAILED DESCRIPTION OF THE INVENTION

It is an object of the invention to provide a micro-structured film comprising polysulfone polymer. It is another object to provide a micro-structured light directing film. It is a further object to provide a micro-structured light directing film with high replication fidelity.

These and other objects of the invention are accomplished by a film comprising microstructures on at least one surface thereof, said film comprising a polysulfone.

The invention provides light re-directing film for liquid crystal display backlight assemblies that are commonly used in rear projection display devices such as liquid crystal display devices. Further, the invention, while providing light re-directing for backlight sources, has a high light transmission rate. A high transmission rate for light re-directing film is particularly important for liquid crystal display devices as a high transmission value allows the liquid crystal display to be brighter or holding the level of brightness the same, allows for the power consumption for the back light to be reduces therefore extending the lifetime of battery powered liquid crystal devices that are common for notebook computers. The polymer materials used for the re-directing film are amorphous and generally are optically clearer that polymeric materials that are predominately crystalline in nature. The structured re-directing feature of the invention can be easily changed to achieve the desired re-directing requirements for many liquid crystal display devices thus allowing the invention materials to be responsive to the rapidly changing product requirements in the liquid crystal display market.

The polymer materials utilized in the invention provide improved thermal stability in display devices compared to prior art light re-directing films that generally comprise UV cast and cured polymer systems. Thermal induced waviness is the direct result of thermal gradients present in display devices during operation. Because prior art light directing film are generally made of polymer materials, the thermal gradient causes thermal expansion leading to undesirable polymeric film waviness. The polymer materials of the invention have a relatively low thermal coefficient of expansion thus reducing the waviness of the light re-directing film in rear illuminated display systems.

The polymer materials utilized in the invention have a Tg compared to prior art materials such as polycarbonate. The higher Tg results in an optical film better suited to the rigors of a rear illuminated LCD TV. Rear illuminated LCD TV systems tend to utilize between 10 and 30 cold cathode florescent lights in the backlight unit resulting in higher operating temperatures compared to laptop computer bight light assemblies that typically contain one or two cold cathode florescent lights. The relatively higher Tg of the polymer materials utilized in the invention provides improved mechanical and thermal stability for optical films used in rear illuminated LCD TV. Improvements relative to prior art materials have been observed for temperature cycling (the temperature difference between on and off state of the LCD TV), vibration, abrasion

between optical films, and film sagging.

The elastic modulus and scratch resistance of the light re-directing film is improved over prior art cast coated polymer light re-directing films rendering a more robust light re-directing film during the assembly and operation of liquid crystal devices. The amorphous materials of the invention generally are hard and scratch resistant therefore allowing these materials to be used in combination with other light re-directing films having hard surfaces.

The micro-structured film has high replication fidelity. High replication fidelity is a necessary requirement for a micro-featured light re-directing film when utilized in display devices. Prior art polysulfone polymers have a relatively high molecular weight leading to low replication fidelity resulting in light re-directing films that have lower optical efficiency than polymer films having high replication fidelity. The invention provides a polymer with a lower molecular weight to improve replication fidelity in a continuous patterning process while simultaneously providing the required mechanical, optical and thermal properties required for a light re-directing film. Because the film is a unitary structure of polymer, there are fewer propensities to curl and few losses between layers that differ in refractive index. When the film is made of two layers, it has a tendency to curl because the two layers typically react differently to changes in environmental conditions (for example, heat or high humidity). Curl is undesirable for the light redirecting film in an LCD because it causes warping of the film in the display, which can be seen through the display, and curl tends to reduce the optical performance of the polymeric film. These and other advantages will be apparent from the detailed description below.

The term as used herein, "transparent" means the ability to pass radiation without significant deviation or absorption. For this invention, "transparent" material is defined as a material that has a spectral transmission greater than 90%. The term "light" means visible light energy. The term "polymeric film" means a film comprising polymers. The term "polymer" means homopolymers, copolymers and polymer blends. The term "microstructure" means a physical polysulfone projection or depression on the surface of the polysulfone film. The microstructure has a roughness average between I and 100 micrometers. The microstructures may be symmetrical or asymmetrical, randomly distributed or in a well defined pattern across the surface of the polysulfone film.

Individual optical elements, in the context of an optical film, mean elements of a well-defined shape that can be projections or depressions in the optical film. Individual optical elements are small relative to the length and width of an optical film. The term "curved surface" is used to indicate a three dimensional element on a film that has curvature in at least one plane. "Wedge shaped elements" is used to indicate an element that includes one or more sloping surfaces, and these surfaces maybe combination of pl anar and curved surfaces. The term "optical film" is used to indicate a thin polymer film that changes the nature of transmitted incident light. For example, a redirecting optical film provides an optical gain (output/input) greater than 1.0. "Optical gain" is defined as output light intensity in a desired direction, usually perpendicular to the film plane, divided by input light intensity. "On-axis gain" is defined as output light intensity perpendicular to the film plane, divided by input light intensity. "Redirecting" is defined as an optical property of an optical film to change the direction on incident light energy.

The term used herein, "percent replication fidelity" is used to quantify replication quality of a microstructure. Percent replication fidelity compares dimensional measurements contained in a master tool to the same dimension in the replicated material. Percent replication fidelity can be calculated by the following formula:

$$\text{\% Replication fidelity} = (\text{replicated material dimension } D_1 / \text{tool dimension } D_1) \times 100$$

Typical microstructure dimensions of interest include microstructure width, height, length, apex width, radius of curvature and surface roughness. For continuous melt replication of polysulfone polymer patterned metallic rollers are utilized as master tools.

The light redirecting layers of the illustrative embodiments are typically substantially transparent optical films or substrates that redistribute the light passing through the films such that the angular distribution of the light exiting the films is different from the angular light distribution incident upon the films. Typically, light redirecting films are provided with prismatic grooves, lenticular grooves, or pyramids on the light exit surface of the films which change the angle of the film/air interface for light rays exiting the films and caused the components of the incident light distribution traveling in a plane perpendicular to the refracting surfaces of the grooves to be redistributed compared to light entering the films. Such light redirection layers may be used, for example, with liquid crystal displays, in laptop computers, word processors, avionic displays, cell phones, PDAs, direct illuminated LCD TV and the like to make the images brighter and of higher contrast. Examples of light re-direction films include but are not limited to turning film, light diffuser, reflective polarizers, light collimating film and light extraction film.

An amorphous polymer is a polymer that does not exhibit melting transitions in a standard thermogram generated

by the differential scanning calorimetry (DSC) method. According to this method (well known to those skilled in the art), a small sample of the polymer (5 - 20 mg) is sealed in a small aluminum pan. The pan is then placed in a DSC apparatus (e.g., Perkin Elmer 7 Series Thermal Analysis System) and its thermal response is recorded by scanning at a rate of 10 - 20°C/min from room temperature up to 300°C. A distinct endothermic peak manifests melting. The absence of such peak indicates that the test polymer is functionally amorphous. A stepwise change in the thermogram represents the glass transition temperature of the polymer

The molecular weights of polysulfone polymer materials were analyzed by size-exclusion chromatography (SEC) with viscometry detection in uninhibited THF using three Polymer Laboratories Plgel mixed-C columns. Absolute molecular weights were calculated from the viscosity data and a universal calibration curve constructed from narrow-molecular weight distribution polystyrene standards between 580 (log M = 2.76) and 2,300,000 (log M = 6.36). Any portion of a polymer distribution appearing beyond the calibration range of the column set should not be used for quantitative purposes. The ordinate "Wn (logM)" is proportional to the weight fraction of polymer at a given molecular weight on a logarithmic scale. The number average ($M_n$), weight average ($M_w$), z-average ($M_z$) molecular weight and intrinsic viscosity in units of dL/g in THF at 30°C are given in the SEC Summary Report. Distributions and molecular weight averages have been corrected for axial dispersion assuming a Gaussian band-broadening function. The precision of $M_w$ for a broad polystyrene standard using the above method is $\pm$5%.

In order to produce a micro-structured film having low thermal induced waviness and high replication fidelity, a film comprising microstructures on at least one surface thereof wherein the film comprises polysulfone is preferred. It has been found that polysulfone polymer has a relatively low coefficient of thermal expansion (CTE) compared to prior art light re-directing polymers. Further, polysulfone has a higher abrasion resistance, higher mechanical modulus, higher $T_g$ and lower water uptake compared to polycarbonate polymer (which is typically utilized to form light re-directing films) resulting in a optical film that can better withstand the rigors of a display backlight assembly, in particular, a liquid crystal backlight assembly.

Polysulfone, or PSU, is a thermoplastic material introduced in 1965 by Union Carbide. It is tough, rigid, high-strength, and transparent, retaining its properties between -100°C and +150°C. It has very high dimensional stability; the size change when exposed to boiling water or +150°C air or steam generally falls below 0.1%. Its glass transition temperature is 185°C. Chemically, polysulfone consists of repeating units of $C_{27}H_{22}O_4S$. It is produced by step polymerization of Bisphenol-A and bis(4-chlorophenyl)sulfone, forming a polyether by elimination of hydrogen chloride.

Polysulfone is highly resistant to mineral acids, alkali, and electrolytes, in pH ranging from 2 to 13. It is resistant to oxidizing agents and therefore it can be cleaned by bleaches. It is also resistant to surfactants and hydrocarbon oils. It is not resistant to low-polar organic solvents (eg. ketones and chlorinated hydrocarbons), and aromatic hydrocarbons. Mechanically, polysulfone has a higher compaction resistance compared to polycarbonate, allowing its use under high pressures. Polysulfone can be reinforced with glass fibers. The resulting composite material has twice the tensile strength and three time increase of its modulus.

Polysulfone can be used in FDA-recognized devices. It is currently used in medical devices, food processing, feeding systems, and automotive and electronic industry. Polysulfone has the highest service temperature of all melt-processable thermoplastics. Its resistance to high temperatures gives it a role of a flame retardant, without compromising its strength that usually results from addition of Name retardants. Its high hydroltic stability allows its use in medical applications requiring autoclave and steam sterilization and display applications requiring high service temperatures.

Preferably the microstructured polysulfone optical film comprises a light re-directing film. Light re-directing films are utilized to change the direction and angular spread of incident light and are widely used in rear-illuminated displays systems such as LCD and projection displays. Polysulfone polymer has a lower CTE, higher mechanical modulus and higher abrasion resistance than prior art polycarbonate polymer providing a more robust light re-directing film compared to polycarbonate. Further, polysulfone polymer has an index of refraction measured at 550 nanometers between 1.63 and 1.66. An index of refraction between 1.63 and 1.66 provides improved on-axis gain of typical light redirecting films compared to polycarbonate and acrylate polymer than generally have an index of refraction of 1.59. Preferred light re-directing films are selected from the list comprising diffusing films, light collimating films, light turning films, retro-reflective films and trans-reflective films.

The polysulfone useful in the invention is characterized by having a repeating group represented by Formula (I) below, and end groups depending on the starting materials.

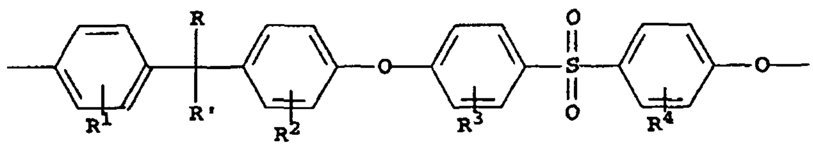

**(I)**

wherein each of R and R' is H or an alkyl group such as methyl or ethyl or a phenyl group; and

each of $R^1$ through $R^4$ independently represents hydrogen or one or more independently selected ring substituents groups.

Suitably, R and R' are methyl groups and each of $R^1$ through $R^4$ represents hydrogen. End groups are dependent on the reactants and are described in the Background art references and methods of making are described In US 5,611,985.

Unless otherwise specifically stated, use of the term "substituted" or "substituent" means any group or atom other than hydrogen. Unless otherwise provided, when a group, compound or formula containing a substitutable hydrogen is referred to, it is also intended to encompass not only the unsubstituted form, but also form further substituted with any substituent group or groups as herein mentioned, so long as the substituent does not destroy properties necessary for utility. Suitably, a substituent group may be halogen or may be bonded to the remainder of the molecule by an atom of carbon, silicon, oxygen, nitrogen, phosphorous, or sulfur. The substituent may be, for example, halogen, such as chloro, bromo or fluoro; nitro; hydroxyl; cyano; carboxyl; or groups which may be further substituted, such as alkyl, including straight or branched chain or cyclic alkyl, such as methyl, trifluoromethyl, ethyl, *t*-butyl, 3-(2,4-di-*t*-pentylphenoxy) propyl, cyclohexyl, and tetradecyl; alkenyl, such as ethylene, 2-butene; alkoxy, such as methoxy, ethoxy, propoxy, butoxy, 2-methoxyethoxy, sec-butoxy, hexyloxy, 2-ethylhcxyloxy, tetradecyloxy, 2-(2,4-di-*t*-pentylphenoxy)ethoxy, and 2-dodecyloxyethoxy; aryl such as phenyl, 4-*t*-butylphenyl, 2,4,6-trimethylphenyl, naphthyl; aryloxy, such as phenoxy, 2-methylphenoxy, alpha- or beta-naphthyloxy, and 4-tolyloxy; carbonamido, such as acetamido, benzamido, butyramido, tetradecanamido, alpha-(2,4-di-*t*-pentyl-phenoxy)acetamido, alpha-(2,4-di-*t*-pentylphenoxy)butyramido, alpba-(3-pentadecylphenoxy)-hexanamido, alpha-(4-hydroxy-3-*t*-butylphenoxy)-tetradecanamido, 2-oxo-pyrrolidin-1-yl, 2-oxo-5-tetradecylpyrrolin-1-yl, N-methyltetradecanamido, N-succinimido, N-phthalimido, 2,5-dioxo-1-oxazolidinyl, 3-dodecyl-2,5-dioxo-1-imidazolyl, and N-acetyl-N-dodecylamino, ethoxycarbonylamino, phenoxycarbonylamino, benzyloxycarbonylamino, hexadecyloxycarbonylamino, 2,4-di-*t*-butylphenoxycarbonylamino, phenylcarbonylamino, 2,5-(di-*t*-pentylphenyl) carbonylamino, *p*-dodecyl-phenylcarbonylamino, *p*-tolylcarbonylamino, N-methylureido, N,N-dimethylureido, N-metbyl-N-dodecylureido, N-bexadecylureido, N,N-dioctadecylureido, N,N-dioctyl-N'-ethylureido, N-phenylureido, N,N-diphenylureido, N-phenyl-N-*p*-tolylureido, N-(*m*-hexadecylphenyl)ureido, N,N-(2,5-di-*t*-pentylphenyl)-N'-ethylureido, and *t*-butylcarbonamido; sulfonamido, such as methylsulfonamido, benzenesulfonamido, *p*-tolylsulfonamido, *p*-dodecylbenzenesulfonamido, N-methyltetradecylsulfonamido, N,N-dipropyl-sulfamoylamino, and hexadecylsulfonamido; sulfamoyl, such as N-methylsulfamoyl, N-ethylsulfamoyl, N,N-dipropylsulfamoyl, N-hexadecylsulfamoyl, N,N-dimethylsulfamoyl; N-[3-(dodecyloxy)propyl]sulfamoyl, N-[4-(2,4-di-*t*-pentylphenoxy)butyl]sulfamoyl, N-methyl-N-tetradecylsulfamoyl, and N-dodecylsulfamoyl; carbamoyl, such as N-methylcarbamoyl, N,N-dibutylcarbamoyl, N-octadecylcarbamoyl, N-[4-(2,4-di-*t*-pentylphenoxy)butyl]carbamoyl, N-methyl-N-tetradecylcarbamoyl, and N,N-dioctylcarbamoyl; acyl, such as acetyl, (2,4-di-*t*-amylpbenoxy)acetyl, phenoxycarbonyl, *p*-dodecyloxyphenoxycarbonyl methoxycarbonyl, butoxycarbonyl, tetradecyloxycarbonyl, ethoxycarbonyl, benzyloxycarbonyl, 3-pentadecyloxycarbonyl, and dodecyloxycarbonyl; sulfonyl, such as methoxysulfonyl, octyloxysulfonyl, tetradecyloxysulfonyl, 2-ethylhexyloxysulfonyl, phenoxysulfonyl, 2,4-di-*t*-pentylphenoxysulfonyl, methylsulfonyl, octylsulfonyl, 2-ethylhexylsulfonyl, dodecylsulfonyl, hexadecylsulfonyl, phenylsulfonyl, 4-nonylphenylsulfonyl, and *p*-tolylsulfonyl; sulfonyloxy, such as dodecylsulfonyloxy, and hexadecylsulfonyloxy; sulfinyl, such as methylsulfinyl, octylsulfinyl, 2-ethylhexylsulfinyl, dodecylsulfinyl, hexadecylsulfinyl, phenylsulfinyl, 4-nonylphenylsulfinyl, and *p*-tolylsulfinyl; thio, such as ethylthio, octylthio, benzylthio, tetradecylthio, 2-(2,4-di-t-pentylphenoxy)ethylthio, phenylthio, 2-butoxy-5-t-octylphenylthio, and p-tolylthio; acyloxy, such as acetyloxy, benzoyloxy, octadecanoyloxy, *p*-dodecylamidobenzoyloxy, N-phenylcarbamoyloxy, N-ethylcarbamoyloxy, and cyclohexylcarbonyloxy; amine, such as phenylanilino, 2-chloroanilino, diethylamine, dodecylamine; imino, such as 1 (N-phenylimido)ethyl, N-succinimido or 3-benzylhydantoinyl; phosphate, such as dimethylphosphate and ethylbutylphosphate; phosphite, such as diethyl and dihexylphosphite; a heterocyclic group, a heterocyclic oxy group or a heterocyclic thio group, each of which may be substituted and which contain a 3 to 7 membered heterocyclic ring composed of carbon atoms and at least one hetero atom selected from the group consisting of oxygen, nitrogen and sulfur, such as pyridyl, thienyl, furyl,

azolyl, thiazolyl, oxazolyl, imidazolyl, pyrazolyl, pyrazinyl, pyrimidinyl, pyrolidinonyl, quinolinyl, isoquinolinyl, 2-furyl, 2-thienyl, 2-benzimidazolyloxy or 2-benzothiazolyl; quaternary ammonium, such as triethylammonium; and silyloxy, such as trimethylsilyloxy.

If desired, the substituents may themselves be further substituted one or more times with the described substituent groups.

The polysulfone polymer of the invention preferably comprises polysulfone polymer having a weight average molecular weight of less than 27,000, more preferably between 5,000 and 21,000. It has been found that replication fidelity of the polymer is improved by utilizing a significantly lower molecular weight form of polysulfone. Typical commercially available polysulfone has a weight average molecular weight of between 40,000 and 100,000. By utilizing a form of polysulfone having a weight average molecular weight less than 27,000 high replication fidelity was obtained in a melt cast replication process compared to commercially available forms of polysulfone having a weight average molecular weight of 63,000. Further, the lower molecular weight polysulfone significantly reduced the temperature and pressure required to obtain high replication fidelity compared to commercially available forms of polysulfone. A reduction in replication process temperature and pressure has been shown to significantly improve micro-structure patterning tooling lifetimes. Additionally, it has been found that high replication pressures used to form features from high molecular weight polysulfone often in unwanted birefringence of the polymer and undesirable mechanical instabilities such as residual stresses or in the case of embossing, undesirable stress gradients which can cause film curl. Polysulfone having a weight average molecular weight less than 4,000 results in an undesirable loss in mechanical properties and embrittlement.

Preferably, the film of the invention has percent replication fidelity of greater than 80%, more preferably greater than 90%, most preferably greater than 95%. High replication fidelity is often required for light redirecting microstructures utilized in LCD display devices. Higher replication fidelity generally results in a higher performing film and is significantly improved with the use of low molecular weight polysulfone polymers. For example, the difference in on-axis gain between a 80% and 90% replicated (microstructure height) 90 degree prism redirecting film can be as much as 15%. A 15% increase in on-axis brightness is very significant in increasing the brightness of a LCD display.

In one embodiment of the invention, the optical film is a light re-direction film. Light re-directing films comprising polysulfone are advantaged over prior art light directing film comprising polycarbonate or acrylate polymer for optical efficiency, mechanical modulus, CTE (coefficient of thermal expansion) and abrasion resistance. In one embodiment of the invention, the light re-directing structures are integral to the optical film. Integral optical features are preferred because they are optically efficient compared to light re-directing structures that are not integral to the film. Further, the integral structures tend to be firmly attached to the film and therefore cannot easily be dislocated from the film. The integral features of the invention also provide for the efficient collimating of transmitted light. In one embodiment of the invention, preferred microstructures have two or more sides that form a ridgeline, which have been shown to provide efficient collimation of light by recycling light entering the features at shallow angles relative to the base of the collimating film

The depth of the integral features is preferably between 10 and 50 micrometers. The depth of the curved integral features is measured from the ridge of the curved integral features to the base of the curved integral features. A depth of less than 8 micrometers results in a collimating film with low brightness, as the amount of unpatterned area specifically relating to the apex area of the feature is large in comparison with integral features that are larger than 8 micrometers. A feature having a depth greater than 55 micrometers is difficult to manufacture, as higher pressures are generally required to form larger features.

The integral features preferably have a width of between 20 and 100 micrometers. When the elements have a width of greater than 130 micrometers, they become large enough that the viewer can see them through the liquid crystal display, detracting from the quality of the display. When the elements have a width of less than 12 micrometers, the width of the ridgeline of the feature takes up a larger portion of the width of the feature. This ridgeline is typically flattened and does not have the same light shaping characteristics of the rest of the element. This increase in amount of width of the ridgeline to the width of the element decreases the performance of the film. More preferably, the curved integral features have a width of between 15 and 60 micrometers. It has been shown that this range provides good light shaping characteristics and cannot be seen by the viewer through a display. The specific width used in a display device design will depend, in part, on the pixel pitch of the liquid crystal display. The element width should be chosen to help minimize moiré interference.

The length of the integral features as measured along the protruding ridge is preferably between 800 and 3000 micrometers. As the long dimension lengthens the pattern becomes one-dimensional and a moiré pattern can develop. As the pattern is shortened the screen gain is reduced and therefore is not of interest. This range of length of the curved integral features has been found to reduce unwanted moiré patterns and simultaneously provide high on-axis brightness.

In another preferred embodiment, the integral features as measured along the protruding ridge is preferably between 100 and 600 micrometers. As the long dimension of the integral features is reduced, the tendency to form moiré patterns is also reduced. This range of integral feature length has been shown to significantly reduce unwanted moiré patterns encountered in display devices while providing on-axis brightness.

The integral features of the invention are preferably overlapping. By overlapping the curved integral features, moiré beneficial reduction was observed. Preferably, the curved integral features of the invention are randomly placed and parallel to each other. This causes the ridges to be generally aligned in the same direction. It is preferred to have generally oriented ridgelines so that the film collimates more in one direction than the other which creates higher on-axis gain when used in a liquid crystal backlighting system. The curved integral features are preferably randomized in such a way as to eliminate any interference with the pixel spacing of a liquid crystal display. This randomization can include the size, shape, position, depth, orientation, angle or density of the optical elements. This eliminates the need for diffuser layers to defeat moiré and similar effects.

At least some of the integral features may be arranged in groupings across the exit surface of the films, with at least some of the optical elements in each of the groupings having a different size or shape characteristic that collectively produce an average size or shape characteristic for each of the groupings that varies across the films to obtain average characteristic values beyond machining tolerances for any single optical element and to defeat moiré and interference effects with the pixel spacing of a liquid crystal display. In addition, at least some of the integral features may be oriented at different angles relative to each other for customizing the ability of the films to reorient/redirect light along two different axes. It is important to the gain performance of the films to avoid planar, unfaceted surface areas when randomizing features. Algorithms exist for pseudo-random placement of these features that avoid unfaceted or planar areas.

Preferably, the integral features have a cross section indicating a 90 degree included angle at the highest point of the feature. It has been shown that a 90 degree peak angle produces the highest on-axis brightness for the light collimating film. The 90 degree angle has some latitude to it, it has been found that an angle of 88 to 92 degrees produces similar results and can be used with little to no loss in on-axis brightness. When the angle of the peak is less than 85 degrees or more than 95 degrees, the on-axis brightness for the light collimating film decreases. Because the included angle is preferably 90 degrees and the width is preferably 15 to 30 micrometers, the curved wedge shaped features preferably have a maximum ridge height of the feature of between 7 and 30 micrometers. It has been shown that this range of heights of the wedge shaped elements provide high on-axis gain and moiré reduction.

The integral features have an average pitch of between 10 and 55 micrometers. The average pitch is the average of the distance between the highest points of two adjacent features. The average pitch is different than the width of the features because the features vary in dimension and they are overlapping, intersecting, and randomly placed on the surface of the film to reduce moiré and to ensure that there is no un-patterned area on the film. It is preferred to have less than 0.1 % un-patterned area on the film, because un-patterned area does not have the same optical performance as the wedge shaped elements, leading to a decrease in performance.

Figures 2, 3 and 4 are magnified top views of preferred microstructures in accordance with an example embodiment. Figure 2 shows a microstructure comprising individual optical elements having one curved surface and one planar surface having a well-defined ridgeline. Figure 3 shows a linear microstructure having a periodicity. Figure 4 shows individual optical elements hat both overlap and intersect.

Preferably, the polymeric film of the invention has an on-axis gain of between 1.3 and 2.0. The light collimating film of the invention balances high on-axis gain with reduced Moiré. It has been shown that an on-axis gain of at least 1.3 is preferred by LCD manufacturers to significantly increase the brightness of the display. An on-axis gain greater than 2.2, while providing high gain on axis, has a very limited viewing angle. Furthermore, an on-axis gain greater than 2.2 provided by the integral features causes a high degree of recycling in a typical LCD backlight resulting in an overall loss in output light as light recycling in a LCD backlight has loss due to absorption, unwanted reflection and light leaking out the sides of a typical LCD backlight unit.

The light redirecting film containing integral features preferably has a half angle of between 10 and 60 degrees. Half angle is defined as angle created from intersection of a line normal to the film and a line drawn through the point at which the illumination is 50% of the on axis-brightness to the film. The half angle describes the radial distribution of brightness, defining the point at which the brightness is decreased by 50%. A half angle greater than 70 degrees utilizing integral features to enhance the brightness of incident light has been shown to not provide sufficient on axis brightness. A half angle of less than 8 degrees, while providing relatively high on axis brightness, suffers from recycling inefficiency and does not provide wide enough illumination for wide viewing application such as television.

Preferably the integral features have roughness Ra less than 30 nanometers. Surface roughness is a measure of the average peak to valley distance for surface roughness. Surface roughness of the film is directly related to the surface roughness of the tool utilized to form the precision integral features. Surface roughness can result from a worn tool, high tool feed rates or damage to the precision tooling surface. Surface roughness greater than 35 nanometers has been shown to reduce the collimating efficiency of the integral features. Surface roughness of the integral features less than 5 nanometers is not cost justified compared to the incremental increase in light output.

The surface roughness of the side opposite the integral features preferably has surface roughness less than 30 nanometers. The surface roughness of the side opposite the integral features can result from polymer casting surface roughness, unwanted shrinking of the polymer or surface scratches during transport of the film. Surface roughness greater than 35 nanometers has been shown to reduce the overall output of the light redirecting film by creating unwanted

diffuse reflection of incident light. A surface roughness less than 5 nanometers is not cost justified compared to the relatively small increase in light output.

In another embodiment of the invention, the film preferably comprises a base layer and a micro-structured layer comprising microstructures on at least one surface thereof wherein only the micro-structured layer comprises polysulfone. As noted previously, as displays continue to increase in viewing area, the dimensions of the light redirecting layers also increase. With increased size, the stress placed on the optical structure increase and the structure may flex or bend. This can alter the optical properties of the optical structure and can deleteriously impact the optical quality of an image or performance of a light source. Accordingly, the base layer is selected to have a thickness and is made of a material that provides rigidity to the other layers of the optical structure. In an example embodiment, the base layer has a thickness of approximately 250μm and a modulus of elasticity of approximately 2 GPa. The base layer preferably comprises a polymer having a $T_g$ greater than 120°C. Polymer base sheets with a $T_g$ greater than 120°C provides resistance to thermal gradients that typically exist in rear illuminated display systems and as a result provide excellent thermal stability.

In addition to desirable mechanical and thermal properties, the base layer may be relatively colorless and substantially transparent. In an example embodiment, the base layer has a transmittivity greater than approximately 0.85. In a specific embodiment, the transmittivity of the base layer is greater than approximately 0.88 and may be greater than approximately 0.95. Moreover, in an example embodiment, the base layer has a b* value of approximately -2.0 to approximately + 2.0 measured on the Commission on Illumination (CIE) scale. Blue tinting agents such as dyes and pigments may be used to adjust the color of the optical element along the blue-yellow axis. An optical element having a slight blue tint is perceptually preferred by consumers to yellow optical elements as the "whites" in an LCD displayed image will tend to have a blue tint if the optical films utilized in the LCD display device have a blue tint.

Transparent base layers are useful for optical structures that are utilized in light transmission mode. In other example embodiment, it may be beneficial for the base layer to be substantially opaque. An opaque layer could provide high reflectivity, in the case of the base material having a high weight percent of a white pigment such as $TiO_2$ or $BaSO_4$, a base layer containing air voids or a base layer containing or having a layer containing reflective metal such as aluminum or silver. Opaque base layers can be utilized for back reflectors for LCD displays, diffusive mirrors or transflective elements.

In an example embodiment, the base layer is a thermoplastic material. In specific embodiments, the base layer may be polycarbonate, polystyrene, oriented polyester or polyethylene terephthalate (PET). These materials are merely illustrative. The base material may be other material that provides the material properties noted previously. These materials include but are not limited to cellulose triacetate, polypropylene, PEN or PMMA.

The polysulfone polymer utilized above typically has poor adhesion to pre-cast polymer sheets especially semi-crystalline polymer sheets that have been oriented. Preferably, an adhesion layer is provided to adhere the polysulfone microstructures and the base layer, allowing the two dissimilar polymer materials to be joined into one structure. The use of dissimilar materials allows, for example, the optical structure to be both mechanically stable over a wide range of operating temperatures and yet have the desired optical properties, such as high light transmission, low coloration and high surface smoothness. The adhesion layer of the invention provides for excellent adhesion between pre-formed polymer sheet and a melt cast polymer. Prior art adhesion layers typically promote adhesion between a room temperature coated polymer and an oriented sheet, the invention adhesion layer provides excellent adhesion between a melt cast polymer such as polycarbonate with a temperatures substantially above the Tg of the polymer and an oriented preformed polymer sheet. The adhesion layer of the invention provides adhesion of the melt cast polymer layer at the time of polymer casting, allowing the melt cast polymer to be efficiently conveyed through a web based manufacturing process and provides sufficient adhesion to enable use in demanding electronic display applications such as LCD, organic light emitting diode (OLED) and flexible electro-wetting displays.

Additionally, the adhesion layer of the invention can be utilized to provide an antistatic layer, which reduces the build-up of static charge on a polymer film having two different materials. The build-up of static change on an optical film has been shown to attract unwanted air-borne particulates, which can create defects in display devices. Further, the adhesion layer of the invention can be utilized to provide a light diffusion means, allowing for diffusion of visible light entering the polymer optical elements. By adding a means for light diffusion in the adhesion layer, the film can have a dual function, eliminating the need for a separate light diffusion film.

Illustratively, the adhesion layer may be acrylic, polyurethane, polyetherimide (PEI) or Poly(vinyl alcohol) PVA. More preferably, when the base layer comprises oriented PET and the optical layer comprises polycarbonate the adhesion layer is polyvinyl acetate-ethylene copolymer or Polyacrylonitrile-vinylidene chloride-acrylic acid copolymer with a monomer ratio of 15/79/6.

In another embodiment of the invention, the film preferably comprises at least two layers of polysulfone. By having at least two layers of polysulfone, each layer can be individually optimized for a particular optical or physical characteristic. For example, each layer could vary by addition of addenda such as antistatic materials, optical brighteners or copolymers of polysulfone. In particular, it has been found that often the polysulfone microstructures require a specific property such as refractive index or hardness than the bulk of the sheet. By providing two or more layers, the properties of the micro structured layer that can be different the remaining layers which may not have the same requirement.

In another preferred embodiment the film preferably comprises two layers wherein the first layer has a weight average molecular weight less than 21,000 and the second layer has a weight average molecular weight of greater than 35,000. By providing a two layer film, the layer having weight average molecular weight less than 21,000 can have the properties of having high heat flow, thus high replication fidelity while the second layer, having a weight average molecular weight of greater than 35,000 can have the property of lower mechanical bulk deformation, also allowing for high replication fidelity. Further, a weight average molecular weight of greater than 35,000 tends to have better mechanical properties leading to stiffer film compared to a single layered film made of polysulfone having a weight average molecular weight of less than 21,000. An example is as follows:

| |
|---|
| Patterned polysulfone layer with weight average molecular weight of 20,500 |
| Polysulfone layer with a weight average molecular weight of 49,300 |

In another preferred embodiment of the invention the film comprises light directing features on one surface and light diffusing features on the surface opposite the light directing features. It has been found that a light directing film often has improved performance if the light directing film is used in combination with a light diffusion film. By providing a diffusive structure on one side of the film and a light re-directing feature on the side opposite the light diffusive structures, the film can benefit from the diffusive elements without the need for an additional film thereby saving weight and eliminating reflection and absorptive losses resulting from the inclusion of a separate diffusive film. In one particular embodiment, the light redirecting microstructure comprises individual microstructures having a ridgeline and an included angle of approximately 90 degrees and the diffuse element comprising a substantially symmetric microstructure having a roughness average between 0.4 and 1.0 micrometers.

The addition of addenda to the film of the invention, either to the microstructures, the non-structured portion of the film or both locations has been shown to further improve the properties of polysulfone polymer. Preferred addenda is selected from the list comprising a tinting compound, release compound, UV absorber, plasticizer, optical brightener, nanometer sized inorganic materials and fire resistant materials.

In a preferred embodiment, minute inorganic particles are added to the polysulfone polymer to change the optical or mechanical characteristic of the polysulfone polymer. The minute inorganic particles preferably comprise inorganic oxides, and more preferably metal oxides. Inorganic oxide particles of the present invention are desirably substantially spherical in shape, relatively uniform in size (have a substantially monodisperse size distribution) or a polymodal distribution obtained by blending two or more substantially monodisperse distributions. It is further preferred that the inorganic oxide particles be and remain substantially non-aggregated (substantially discrete); as aggregation can result in large particles that scatter light, reducing optical clarity.

A wide range of colloidal inorganic oxide particles can be used in the optical element of the present invention. Representative examples include silica, titania, alumina, zirconia, vanadia, chromia, iron oxide, antimony oxide, tin oxide, and mixtures thereof. The inorganic oxide particles can comprise essentially a single oxide such as silica, a combination of oxides, such as silica and aluminum oxide, or a core of an oxide of one type (or a core of a material other than a metal oxide) on which is deposited an oxide of another type.

An optical brightener is substantially colorless, fluorescent, organic compound that absorbs ultraviolet light and emits it as visible blue light. Examples include but are not limited to derivatives of 4,4'-diaminostilbene-2,2'-disulfonic acid, coumarin derivatives such as 4-methyl-7-diethylaminocoumarin, 1-4-Bis (O-Cyanostyryl) Benzol and 2-Amino-4-Methyl Phenol. In a display, the rear ultraviolet source is often s source for UV light energy. By incorporating an optical brightener in the polysulfone polymer, the transmitted UV light energy incident on the polysulfone film is converted into useful blue light.

The micro-structures or the side opposite the microstructures may be coated or treated before or after thermoplastic with any number of coatings which may be used to improve the properties of the sheets including printability, to provide a vapor barrier, to make them heat sealable, or to improve adhesion. Examples of this would be acrylic coatings for printability, coating polyvinylidene chloride for heat seal properties. Further examples include flame, plasma or corona discharge treatment to improve printability or adhesion.

The polysulfone polymer may be incorporated with e.g. an additive or a lubricant such as silica for improving the surface-slipperiness of the film within a range not to deteriorate the optical characteristics to vary the light-scattering property with an incident angle. Examples of such additive are organic solvents such as xylene, alcohols or ketones, fine particles of an acrylic resin, silicone resin or a metal oxide or filler.

The polysulfone polymer may be a homopolymer or a copolymer. It is also allowable to add, to the composition of this invention, at least one member selected from the group consisting of thermoplastic resins such as polyethylene, polypropylene, polyamide, polyester, polycarbonate, modified polyphenylene oxide, polyphenylene sulfide, polyether-imide, polyether-ketone, polyamide-imide and the like and thermosetting resins such as phenolic resin, epoxy resin,

polyimide and the like, unless their addition causes an adverse influence on the object of this invention. It is understood that some of the above material may not be miscible with polysulfone resulting in an optical film having a % visible light transmission less than 90%.

Fig. 1 is a simplified schematic diagram of an apparatus for fabricating the optical film. The apparatus includes an extruder 101, which extrudes polysulfone polymer 103. The apparatus also includes a patterned roller 105 that contains microstructures that form the optical features in the optical layer 113. Additionally, the apparatus includes a pressure roller 107 that provides pressure to force material 103 into patterned roller 105 and stripping roller 111 that aids in the removal of material 113 from patterned roller 105.

In operation, a base layer 109 is forced between the pressure roller 107 and the patterned roller 105 with the melt extruded material 103. In an example embodiment, the base layer 109 is an oriented sheet ofpolymer. Moreover, the polysulfone 103 forms the optical layer 113, which includes optical features after passing between the patterned roller 105 and the pressure roller 107. Alternatively, an adhesion layer may be co-extruded with the polysulfone 103 at the extruder 101. Co-extrusion offers the benefit of two or more layers. The co-extruded adhesion layers can be selected to provide optimum adhesion to the base layer 109 and the optical layer 113 creating higher adhesion than a mono-layer. Accordingly, the co-extruded adhesion and optical layers are forced with the base layer between the pressure roller 107 and the patterned roller 105. After passing between the pressure roller 107 and the patterned roller 105, a layer 113 is passed along a roller 111. In a specific embodiment, the layer 113 is an optical microstructure of the embodiments described in detail.

In another preferred embodiment, the polysulfone 103 comprises a co-extruded layer of polymer having a skin layer that contacts the pattered roller 105 that has a melt index that is 50% greater than the remaining layers in the co-extruded structure. It has been found that a high flow skin layer aids in the replication fidelity of the polymer. The layers other than the skin layer may have a much lower melt index, resulting in a mechanically stiffer optical film that is better suited to withstand the rigors of display devices.

The patterned roller 105 preferably comprises a metallic roller containing the desired microstructures. The microstructures may be machined or randomly deposited onto the surface of the roller. Known techniques such as diamond turning, bead blasting, coining, micro-indentation or electro-mechanical engravings have been shown to produce acceptable macrostructures. Additionally, thin dense chrome may be applied electrolytically to the microstructures, resulting in a bond superior to platings or coatings applied without the use of electricity (i.e. electroless nickel, etc.). A minimum deposition thickness of 0.25 micrometers prevents hydrogen build-up that often plagues electro-chemical plating. Thin, dense chrome is hard chrome, which is so thin it has not yet built up enough stress to cause cracking, and therefore has good corrosion resistance. It uniformly deposits a dense, high-chromium, non-magnetic alloy on the surface of the metallic microstructures. Additionally, the thin chrome has been shown to increase lubricity, prevents galling, improve wear resistance, have a lower coefficient of friction, provides excellent anti-seizure characteristics and has lower corrosion resistance compared to metallic macrostructures without the addition of the thin dense chrome allowing the patterning roller to withstand the processing temperatures required by the polysulfone polymer.

Preferably, the polysulfone polymer melt, 103 has a weight average molecular weight of less than 27,000. By providing a polysulfone polymer with weight average molecular weight of less than 27,000 replication fidelity of the features in patterned roller 105 is significantly improved over polysulfone polymer that has a weight average molecular weight of greater than 50,000. The lower molecular weight allows the polysulfone polymer to better flow into the micro-structures present on roller 105 at dwell times of less than 0.25 seconds. Melt extrusion patterning of the polysulfone polymer material with a dwell time of less than 0.25 seconds allows for efficient and low cost production of microstructured polysulfone materials in a roll to roll configuration enabling microstructured polysulfone to be utilized in cost sensitive liquid crystal display backlight assemblies.

Preferably, roller 105 is heated to a temperature greater than 200 °C. Temperatures above 200 °C and less than 400 °C allows for the polysulfone polymer to stay above the Tg of the polymer, further increasing the replication fidelity of the polysulfone polymer. The combination of weight average molecular weight of less than 27,000 and roller 105 temperatures above 200 C allows for high replication fidelity for microstructures having an aspect ratio (height of microstructure to width of the microstructures) greater than 0.5 and up to 5.0 that were thought to be unobtainable utilizing polysulfone.

The invention may be used in conjunction with any liquid crystal display devices, typical arrangements of which are described in the following. Liquid crystals (LC) are widely used for electronic displays. In these display systems, an LC layer is situated between a polarizer layer and an analyzer layer and has a director exhibiting an azimuthal twist through the layer with respect to the normal axis. The analyzer is oriented such that its absorbing axis is perpendicular to that of the polarizer. Incident light polarized by the polarizer passes through a liquid crystal cell is affected by the molecular orientation in the liquid crystal, which can be altered by the application of a voltage across the cell. By employing this principle, the transmission of light from an external source, including ambient light, can be controlled. The energy required to achieve this control is generally much less than that required for the luminescent materials used in other display types such as cathode ray tubes. Accordingly, LC technology is used for a number of applications, including but

not limited to digital watches, calculators, portable computers, electronic games for which light weight, low power consumption and long operating life are important features.

Active-matrix liquid crystal displays (LCDs) use thin film transistors (TFTs) as a switching device for driving each liquid crystal pixel. These LCDs can display higher-definition images without cross talk because the individual liquid crystal pixels can be selectively driven. Optical mode interference (OMI) displays are liquid crystal displays, which are "normally white," that is, light is transmitted through the display layers in the off state. Operational mode of LCD using the twisted nematic liquid crystal is roughly divided into a birefringence mode and an optical rotatory mode. "Film-compensated super-twisted nematic" (FSTN) LCDs are normally black, that is, light transmission is inhibited in the off state when no voltage is applied. OMI displays reportedly have faster response times and a broader operational temperature range.

Ordinary light from an incandescent bulb or from the sun is randomly polarized, that is, it includes waves that are oriented in all possible directions. A polarizer is a dichroic material that functions to convert a randomly polarized ("unpolarized") beam of light into a polarized one by selective removal of one of the two perpendicular plane-polarized components from the incident light beam. Linear polarizers are a key component of liquid-crystal display (LCD) devices.

The liquid crystal display device includes display devices having a combination of a driving method selected from e.g. active matrix driving and simple matrix drive and a liquid crystal mode selected from e.g. twist nematic, supertwist nematic, ferroelectric liquid crystal and anti ferroelectric liquid crystal mode, however, the invention is not restricted by the above combinations. In a liquid crystal display device, the oriented film of the present invention is necessary to be positioned in front of the backlight. The lenslet diffuser film of the present invention can even the lightness of a liquid crystal display device across the display because the film has excellent light-scattering properties to expand the light to give excellent visibility in all directions. Although the above effect can be achieved even by the single use of such lenslet diffuser film, plural number of films may be used in combination. The homogenizing lenslet diffuser film may be placed in front of the LCD material in a transmission mode to disburse the light and make it much more homogenous. The present invention has a significant use as a light source de-structuring device. In many applications, it is desirable to eliminate from the output of the light source itself the structure of the filament which can be problematic in certain applications because light distributed across the sample will vary and this is undesirable. Also, variances in the orientation of a light source filament or arc after a light source is replaced can generate erroneous and misleading readings. A film of the present invention placed between the light source and the detector can eliminate from the output of the light source any trace of the filament structure and therefore causes a homogenized output which is identical from light source to light source.

The polysulfone microstructured film may be used to control lighting for stages by providing pleasing homogenized light that is directed where desired. In stage and television productions, a wide variety of stage lights must be used to achieve all the different effects necessary for proper lighting. This requires that many different lamps be used which is inconvenient and expensive. The films of the present invention placed over a lamp can give almost unlimited flexibility dispersing light where it is needed. As a consequence, almost any object, moving or not, and of any shape, can be correctly illuminated.

The reflection film formed by applying a reflection layer composed of a metallic film, etc., to the polysulfone structured film of the present invention can be used e.g. as a retroreflective member for a traffic sign. It can be used in a state applied to a car, a bicycle, person, etc.

The polysulfone structured films of the present invention may also be used in the area of law enforcement and security systems to homogenize the output from laser diodes (LDs) or light emitting diodes (LEDs) over the entire secured area to provide higher contrasts to infrared (IR) detectors. The films of the present invention may also be used to remove structure from devices using LED or LD sources such as in bank note readers or skin treatment devices. This leads to greater accuracy.

Fiber-optic light assemblies mounted on a surgeon's headpiece can cast distracting intensity variations on the surgical field if one of the fiber-optic elements breaks during surgery. A polysulfone structured film of the present invention placed at the ends of the fiber bundle homogenizes light coming from the remaining fibers and eliminates any trace of the broken fiber from the light cast on the patient. A standard ground glass diffuser would not be as effective in this use due to significant back-scatter causing loss of throughput.

The polysulfone structured film of the present invention can also be used to homogeneously illuminate a sample under a microscope by destructuring the filament or arc of the source, yielding a homogeneously illuminated field of view. The films may also be used to homogenize the various modes that propagate through a fiber, for example, the light output from a helical-mode fiber.

The polysulfone structured film of the present invention also has significant architectural uses such as providing appropriate light for work and living spaces. In typical commercial applications, inexpensive transparent polymeric diffuser films are used to help diffuse light over the room. A homogenizer of the present invention which replaces one of these conventional diffusers provides a more uniform light output so that light is diffused to all angles across the room evenly and with no hot spots while having superior resistance to the elevated temperatures encountered in commercial lighting.

The polysulfone microstructured film of the present invention may also be used to diffuse light illuminating artwork. The transparent polymeric film diffuser provides a suitable appropriately sized and directed aperture for depicting the artwork in a most desirable fashion.

Further, the polysulfone microstructured film of the present invention can be used widely as a part for optical equipment such as a displaying device. For example, it can be used as a light-reflection plate laminated with a reflection film such as a metal film in a reflective liquid crystal display device or a front scattering film directing the film to the front-side (observer's side) in the case of placing the metallic film to the back side of the device (opposite to the observer), in addition to the aforementioned light-scattering plate of a backlight system of a liquid crystal display device. The polysulfone structured film of the present invention can be used as an electrode by laminating a transparent conductive layer composed of indium oxide represented by ITO film. If the material is to be used to form a reflective screen, e.g. front projection screen, a light-reflective layer is applied to the transparent polymeric film diffuser.

Another application for the transparent polymeric diffuser film is a rear projection screen, where it is generally desired to project the image from a light source onto a screen over a large area. The viewing angle for a television is typically smaller in the vertical direction than in the horizontal direction. The diffuser acts to spread the light to increase viewing angle.

Embodiments of the invention may provide a micro-structured polymer film that is more readily replicated faithfully, are scratch-resistant, don't melt easily, and easier to cut

The following examples illustrate the practice of this invention. They are not intended to be exhaustive of all possible variations of the invention. Parts and percentages are by weight unless otherwise indicated.

## EXAMPLES

Example 1

In this example, several grades of polysulfone polymer, differing in molecular weight, were patterned by melt extruding the polysulfone polymers between a patterned metallic roller and pressure roller utilizing the process shown in Fig. 1. This example will demonstrate the increase in replication fidelity of the height of a light redirecting microstructure as the molecular weight of the polysulfone polymer is reduced.

The patterned roller was manufactured by a process including the steps of electroplating a layer of bright nickel onto the surface of a copper roller. Individual lenses were electro-mechanically engraved into the surface of the nickel using a diamond tool. The lenses had a height of 35 micrometers, a width of 32 micrometers and a length of 1200 micrometers. The lenses had a ridgeline and an apex angle of approx 90 degrees. The apex had a flat of 0.78 micrometers. The general shape of the microstructure electro-mechanically engraved into the roller is shown in Fig 2.

The above patterned roller was utilized to create a patterned polymer film 125 micrometers thick by melt extrusion the following polysulfone polymers from a melt extrusion slot die utilizing the process illustrated in Fig. 1:

Polymer A: Polysulfone polymer with a weight average molecular weight of 48,400

Polymer B: Polysulfone polymer with a weight average molecular weight of 37,700

Polymer C: Polysulfone polymer with a weight average molecular weight of 22,300

Three micro structured films (corresponding to the polysulfone polymers utilized above) were formed using the above polysulfone polymers. The patterned roller temperature was 210°C and the micro structured films were formed continuously at a speed of 8 linear meters/min. The above micro structured films were imaged under high magnification and the apex width of the lenses and the height of the lenses were optically measured. Replication fidelity is a measure of the ability of the polymer to fully replicate a master tool and in this example the electro-mechanically engraved lens in the patterned metallic roller. Since the engraved lens in the roller contained a flat of 0.78 micrometers, 100% replication would result in a polysulfone lens having a flat of 0.78 micrometers. A flat greater than 0.78 micrometers indicates less than 100% replication. The layer structure of the polysulfone microstructure films of the example was:

| |
|---|
| Micro structured polysulfone lenses |
| Polysulfone |

The flat width, lens height both measured in micrometers and the calculated % replication fidelity of the lens height are listed in Table 1 below for each of the polysulfone polymers utilized to form the light redirecting film of the example:

Table 1

| Polymer | Weight Average Molecular Weight | Flat Width (micrometers) | Lens Height (micrometers) | % Replication Fidelity of Lens Height |
|---|---|---|---|---|
| Polymer A | 48,400 | 16.3 | 17.9 | 51% |
| Polymer B | 37,700 | 8.7 | 29.4 | 84% |
| Polymer C | 22,300 | 1.21 | 34.3 | 98% |

The results listed in table #1 clearly demonstrate that for the melt extrusion patterning process illustrated in Fig 1, the lower molecular weight average polysulfone polymers bad higher replication fidelity for both the lens height and flat width (high replication %). High replication fidelity is often required for precision optical lenses as described above. The function of the lens is dependant on the ability of the lens to be replicated. The lower weight average molecular weight polysulfone polymer, especially polymer C, provided excellent melt flow characteristics and was able to flow into 98% of the lens geometry at a patterning line speed of 8 linear meters/min allowing for efficient and low cost film to be made. Further, the polysulfone polymer having a weight average molecular weight of 22,300 did not suffer from any measurable loss in mechanical or light transmission.

While the above example is directed at a specific light redirecting microstructure, other polysulfone microstructures such as light diffusing microstructures, light turning microstructures, retro-reflective microstructures and trans-reflective microstructures are useful in display devices such as liquid crystal devices. Further, high fidelity microstructured polysulfone polymer may also be used in abrading application, anti-slip surfaces, microfluidic channels, imaging supports, packaging material and the like.

The entire contents of the patents and other publications referred to in this specification are incorporated herein by reference. The invention has been described in detail with particular reference to certain preferred embodiments thereof, but it will be understood that variations and modifications can be effected within the spirit and scope of the invention.

**PARTS LIST**

101 Extruder
103 Melt extruded polysulfone
105 Patterned Roller
107 Pressure roller
109 Base Layer
111 Roller
113 Microstructure

**Claims**

1. A film comprising microstructures on at least one surface thereof, said film comprising a polysulfone polymer.

2. The film of claim 1 wherein said film is an optical film comprising integral light redirecting microstructures on at least one surface thereof.

3. The film of claim 1 wherein the polysulfone is **characterized by** having a repeating group represented by Formula (I) below:

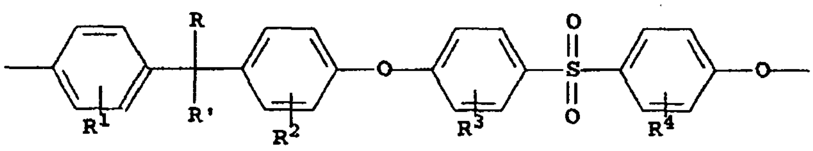

(I)

wherein each of R and R' is H or an alkyl group such as methyl or ethyl or a phenyl group; and each of $R^1$ through $R^4$ independently represents hydrogen or one or more independently selected ring substituent groups.

**4.** The film of claim 3 wherein R and R' are methyl groups and each of $R^1$ through $R^4$ represents hydrogen.

**5.** The film of claim 1 wherein the polysulfone has a weight average molecular weight of less than 27,000.

**6.** The film of claim 5 wherein the polysulfone has a weight average molecular weight of from 5,000 to 21,000.

**7.** The film of claim 2 wherein the light redirecting microstructures comprise individual elements having a ridgeline.

**8.** The film of claim 2 wherein the light redirecting microstructures are linear prismatic structures.

**9.** The film of claim 1 comprising a base layer and a microstructured layer comprising microstructures on at least one surface thereof wherein only the microstructured layer comprises a polysulfone polymer.

**10.** The film of claim 2 comprising a base layer and a light redirecting layer comprising light redirecting microstructures on at least one surface thereof wherein only the light redirecting layer comprises a polysulfone polymer.

**11.** The film of claim 10 wherein the base layer comprises a polymer having a Tg greater than 120°C.

**12.** The film of claim 1 further comprising addenda selected from the list comprising a tinting compound, release compound, UV absorber, plasticizer, optical brightener, nanometer sized inorganic materials and fire resistant materials.

**13.** The film of claim 1 wherein the microstructures have a height between 5 and 100 micrometers.

**14.** The film of claim 1 wherein the film comprises two layers wherein the first layer has a weight average molecular weight less than 21,000 and the second layer has a weight average molecular weight of greater than 35,000.

**15.** A method of forming the film of claim 1 comprising continuously melt casting the polysulfone polymer onto a patterned heated roller and cooling the polysulfone polymer while the polysulfone polymer is in contact with the heated roller having a pattern corresponding to the negative of the desired pattern.

**16.** The method of claim 15 wherein the polysulfone polymer has an average molecular weight less than 27,000.

**17.** The method of claim 15 wherein said heated roller is heated to a temperature greater than 200°C.

**18.** The method of claim 15 wherein the patterned heat roller contains individual elements.

**19.** The method of claim 15 wherein the patterned heat roller comprises an outermost surface comprising chrome having a hardness greater than 80 Rockwell C.

**20.** A liquid crystal device comprising a light source and a polysulfone polymeric film comprising a plurality of surface structures on a surface thereof wherein the polysulfone polymeric film is located between the light source and a polarizing film.

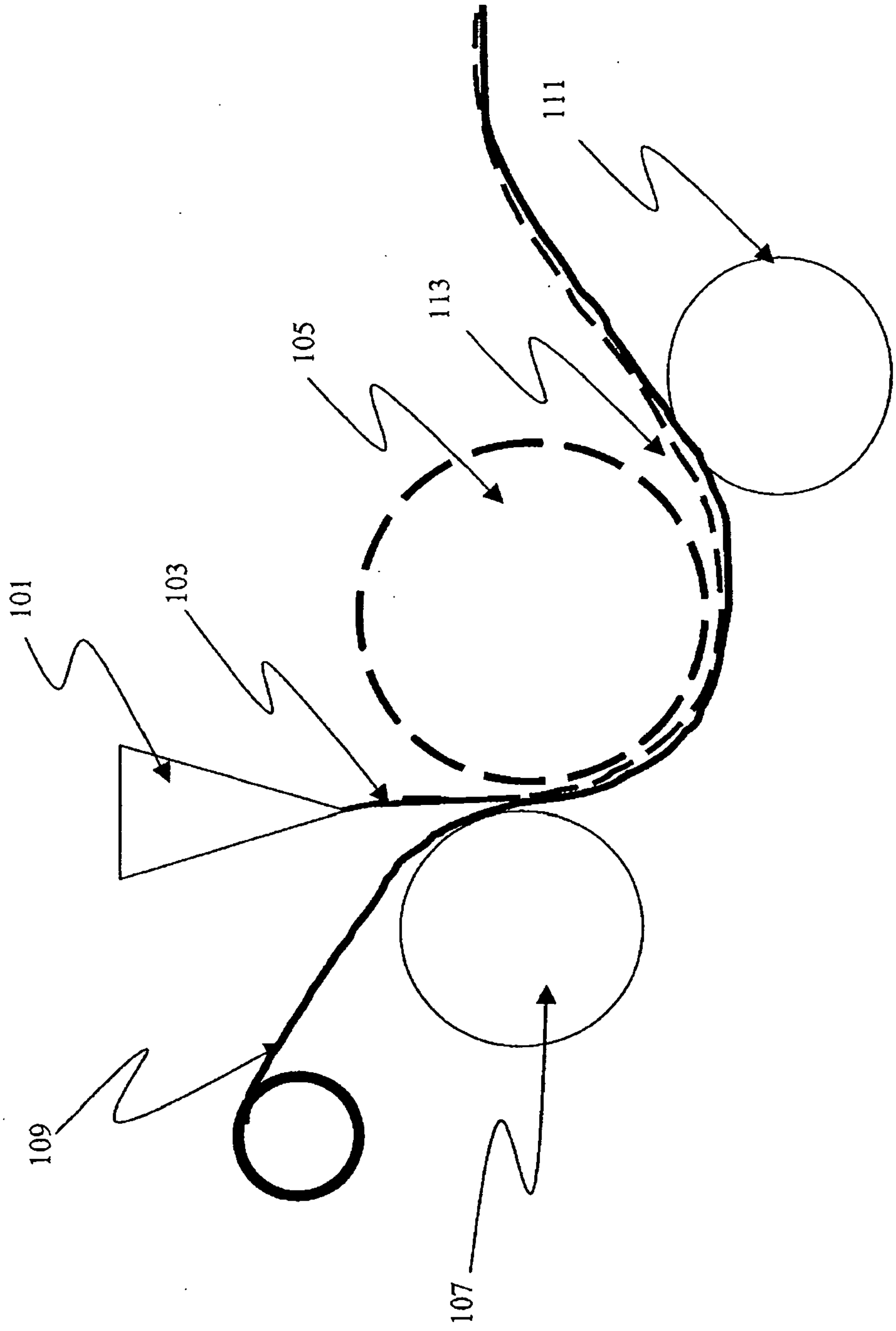


Figure 1

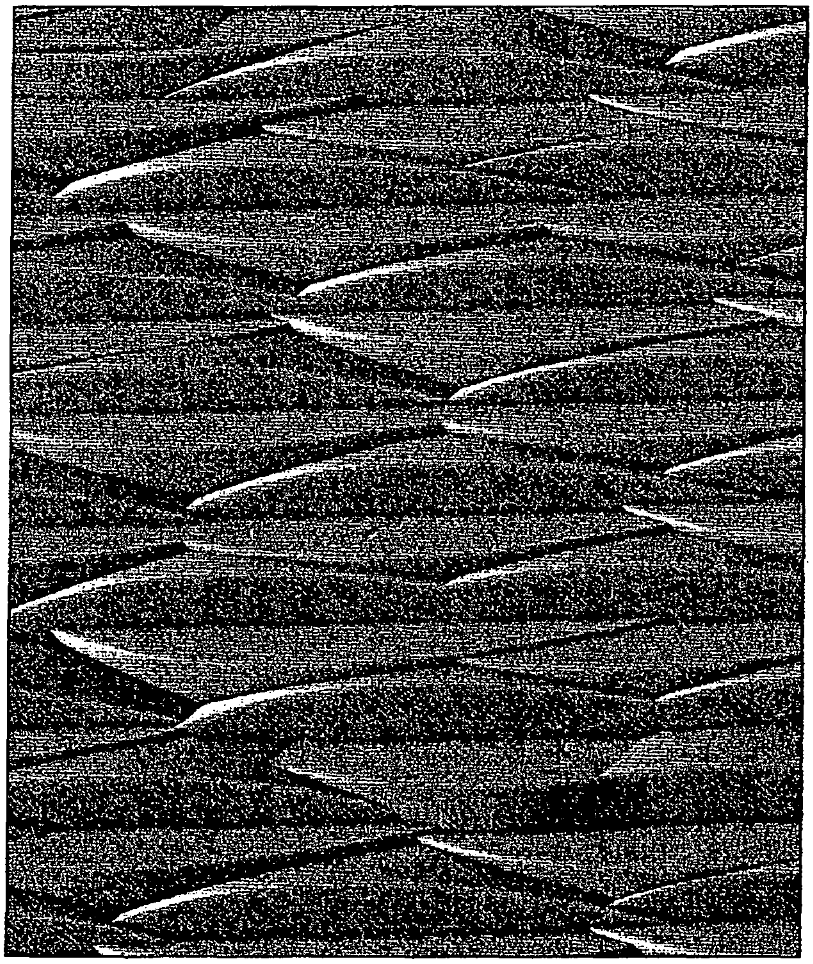

Figure 2

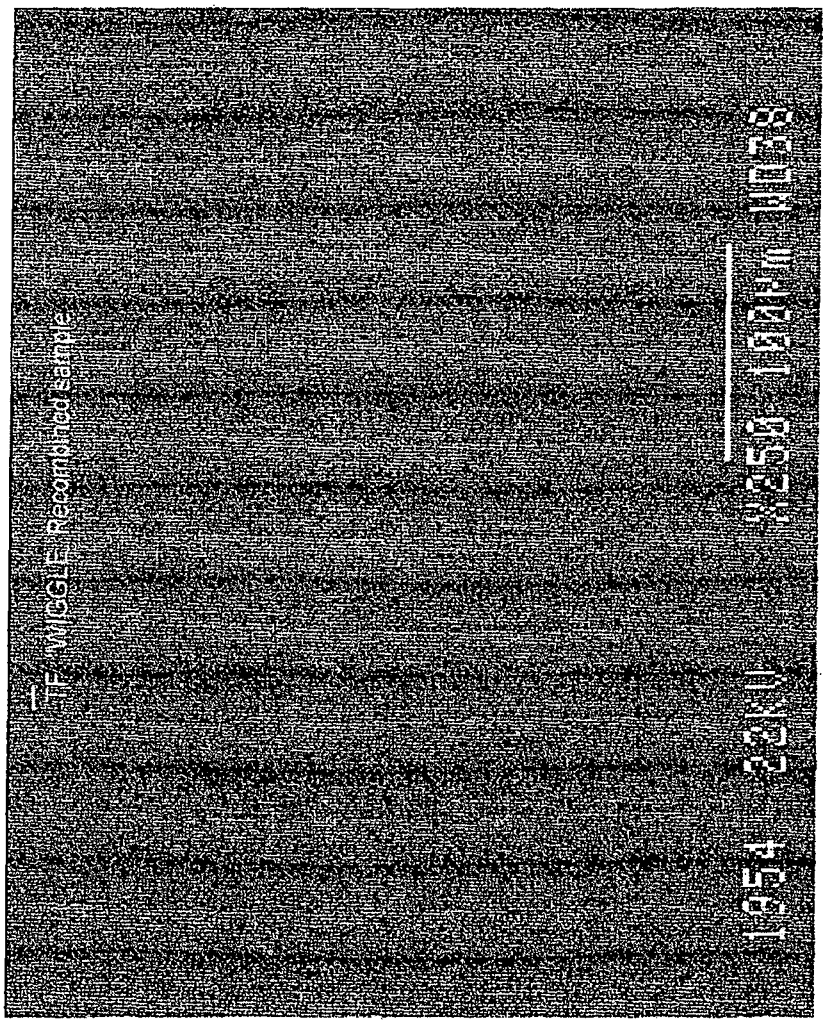


Figure 3

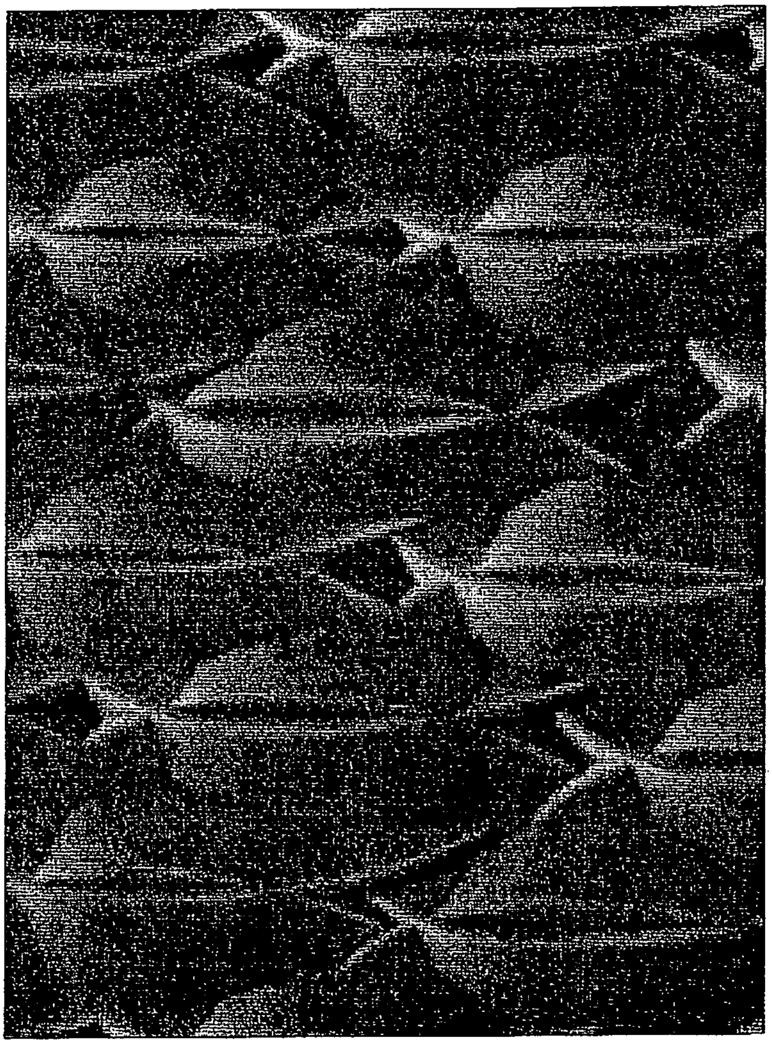

Figure 4

European Patent Office

# EUROPEAN SEARCH REPORT

Application Number
EP 07 25 3095

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 1 548 470 A (ZEON CORP [JP]) 29 June 2005 (2005-06-29)<br>* paragraphs [0029], [0056], [0057], [0072]; claims * | 1-4, 7-14,20<br>5,6, 15-19 | INV.<br>C08L81/06<br>G02B5/30<br>C08J5/18 |
| X<br>A | WO 2005/057257 A (REFLEXITE CORP [US]; NILSEN ROBERT B [US]; ROWLAND WILLIAM P [US]) 23 June 2005 (2005-06-23)<br>* page 17, line 30 - page 18, line 11; claims 1-12; figure 31 *<br>* page 24, lines 18-27 * | 1-4, 7-14,20<br>5,6, 15-19 | |
| X<br>A | EP 0 999 033 A (ROHM & HAAS [US]) 10 May 2000 (2000-05-10)<br>* paragraphs [0051] - [0053], [0058], [0068], [0072]; claims 2,24; examples 1-5 * | 1-4, 7-14,20<br>5,6, 15-19 | |
| | | | TECHNICAL FIELDS SEARCHED (IPC) |
| | | | C08L<br>G02B<br>C08J |

The present search report has been drawn up for all claims

1

| Place of search | Date of completion of the search | Examiner |
|---|---|---|
| Munich | 28 February 2008 | Kolitz, Roderich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 07 25 3095

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2008

| Patent document cited in search report | Publication date | Patent family member(s) | Publication date |
|---|---|---|---|
| EP 1548470 A | 29-06-2005 | CN 1688901 A | 26-10-2005 |
| | | WO 2004017106 A1 | 26-02-2004 |
| | | KR 20050053610 A | 08-06-2005 |
| | | US 2005212989 A1 | 29-09-2005 |
| WO 2005057257 A | 23-06-2005 | NONE | |
| EP 0999033 A | 10-05-2000 | CA 2287055 A1 | 02-05-2000 |
| | | CN 1253068 A | 17-05-2000 |
| | | DE 69918024 D1 | 22-07-2004 |
| | | DE 69918024 T2 | 30-06-2005 |
| | | JP 2000296544 A | 24-10-2000 |
| | | KR 20000035083 A | 26-06-2000 |
| | | TW 453944 B | 11-09-2001 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5611985 A, Kobayashi
- US 3737409 A
- US 6433071 B, Arai
- US 6013716 A, Nomura
- US 20050212989 A, Kashiwagi
- US 20050167863 A
- US 6721102 B
- US 20010053075 A
- US 6027220 A